# EUROPEAN PATENT SPECIFICATION

(11) **EP 2 646 700 B1**
(45) Date of publication and mention of the grant of the patent: **24.06.2015**
(21) Application number: 11813840.3
(22) Date of filing: 19.12.2011
(51) Int. Cl.: F16J 15/447, F16C 27/04

(54) **BEARING ISOLATOR SEAL**
LAGERDÄMPFERDICHTUNG
JOINT D'ISOLATEUR DE PALIER

(30) Priority: 01.12.2010 US 418434 P
(43) Date of publication of application: 09.10.2013
(73) Proprietor: Parker-Hannifin Corporation, Cleveland, Ohio 44124-4141 (US)
(72) Inventor: THOMAS, Ronald J., Jr., Cayuga New York 13034 (US)
(74) Representative: Belcher, Simon James
(86) International application number: PCT/US2011/062838
(87) International publication number: WO 2012/075254

(56) References cited:
- WO-A1-99/02821
- US-A- 4 706 968
- US-A- 5 221 095

## Description

The present invention relates broadly to seals for sealing between a rotating shaft and its housing, and more particularly to such a seal of a bearing isolator variety including a stationary stator part and rotatable rotor part which may be snap-fit together.

As further described, for example, in US-7857320 and US-6726214, pumps, turbines, electric motors, and other machines have shafts that can rotate at a relatively high rate of speed. Such shafts are supported by at least one bearing to reduce friction. In these machines it is necessary to seal the space between the housing and the rotating shaft to prevent contaminants such as abrasive particles, moisture, or corrosive media from entering into the bearing as the service life of the bearing can be shortened by the ingress of such contaminates. It is also necessary to seal such space to inhibit oil or other lubricating fluid from leaking out of the housing. A dynamic seal that performs these functions is commonly referred to as a bearing isolator seal.

Bearing isolator seals conventionally are formed of a pair of ring-shaped parts that rotate with respect to each other when the shaft is rotated. One of the parts, often called the "stator" is fixed to the housing and does not rotate. The other part, often called a "rotator", rotates with the shaft. As shown in US-2765204, US-3109660, US-3727923, US-4466620, US-4706968, US-4743034, US-4865332, US-4809941, US-4989883, US-5069461, US-5290047, US-5316317, US-5378000, US-5431414, US-5522601, US-5704719, US-5735530, US-5967524, US-6017037, US-6024362, US-6065755, US-6113105, US-6142479, US-6164657, US-6311984, US-6336637, US-6376807, US-6386546, US-6419233, US-6471215, US-6485022, US-6530573, US-7052014, US-7521827, US-7789395 and US-7839294, and in US-A-2008/0063330 and US-A-2008/0078648, bearing isolator seals may be of different types such as labyrinth, lip, magnetic, or brush.

US-4706968 discloses a mechanical seal for a shaft which rotates within a housing, according to the preamble of claim 1. The seal has a first ring which is sealed to a bore in the housing and a second ring which is frictionally engaged with the surface of the shaft. The first and second rings have opposing faces. Annular recesses are formed in each of the annular faces which are aligned so that they can receive a diffuser ring. The diffuser ring has a raised edge or a groove along its circumference at each end which engages a groove or a protrusion in the wall of the recesses in the first and second rings so as to lock the first and second rings together.

The present invention is directed to a bearing isolator seal including a stator and a rotor which may be snap-fit together. An internal diffuser ring may be interposed between the stator and the rotor to direct the flow of any contaminates entering the seal out of the seal, and which may be used to set the spacing between the rotor and stator.

The seal of the present invention improves the exclusion and expulsion of fluids from the seal, and provides for a robust unitization between the rotor and stator parts allowing for larger sizes such as up to 30.5 cm (12 inch). The diffuser ring can provide improved capability to control the flow of any contamination that does enter the sea by directing the flow away from the interfaces at the shaft of the stator and rotor. In contrast to an internal rubber O-ring or similar seal, the diffuser ring may be made non-contacting and thus not subject to wear as a result of axial movement of the shaft.

The diffuser ring further may be used to provide optimal spacing between the rotor and stator during installation, and thus reducing undesired contact between the rotor and stator during initial start-up. This can result in a significant reduction in the amount of metallic dust which otherwise may develop.

The present invention, accordingly, comprises the design, fabrication, construction, combination of elements, and/or arrangement of parts and steps which are exemplified in the detailed disclosure to follow. Advantages of the bearing isolator seal of the present invention include improved exclusion of contaminates, and a robust unitized construction allowing for the design of larger sizes such as up to 30.5 cm (12 inch). These and other advantages will be readily apparent to those skilled in the art based upon the disclosure contained herein.

For a fuller understanding of the nature and objects of the invention, reference should be had to the following detailed description taken in connection with the accompanying drawings wherein:
Fig. 1 is a perspective view of a representative bearing isolator seal according to the present invention
Fig. 2 is a front elevational view of the seal of Fig. 1;
Fig. 3 is a fragmentary, half cross-sectional view of the seal of Fig. 2 taken through line 3-3 of Fig. 2;
Fig. 4 is a magnified view of a detail of one side of the half cross-sectional view of Fig. 3 showing the diffuser ring and snap-fit features according to the present invention;
Fig. 5 is a magnified view showing a detail of the other side of the half cross-sectional view of Fig. 3 but with the diffuser ring removed and with an alternative embodiment of the snap-fit feature; and
Fig. 6 is a magnified view as in Fig. 5 showing another alternative embodiment of the snap-fit feature.

Certain terminology may be employed in the following description for convenience rather than for any limiting purpose. For example, the terms "forward" and "rearward", "front" and "rear", "right" and "left", "upper" and "lower", and "top" and "bottom" designate directions in the drawings to which reference is made, with the terms "inward", "inner", "interior", or "inboard" and "outward" "outer", "exterior", or "outboard" referring, respectively, to directions toward and away from the centre of the referenced element, the terms "radial" or "horizontal" and "axial" or "vertical" referring, respectively, to directions or planes which are perpendicular, in the case of radial or horizontal, or parallel, in the case of axial or vertical, to the longitudinal central axis of the referenced element, and the terms "downstream" and "upstream" referring, respectively, to directions in and opposite that of fluid or other flow. Terminology of similar import other than the words specifically mentioned above likewise is to be considered as being used for purposes of convenience rather than in any limiting sense. In certain views of the figures, the axial or longitudinal direction may be shown by an arrow labelled "A", and the radial direction may be shown by an arrow labelled "R". The terms "axial" and "longitudinal" may be used interchangeably.

In the figures, elements having an alphanumeric designation may be referenced herein collectively or in the alternative, as will be apparent from context, by the numeric portion of the designation only. Further, the constituent parts of various elements in the figures may be designated with separate reference numerals which shall be understood to refer to that constituent part of the element and not the element as a whole. General references, along with references to spaces, surfaces, dimensions, and extents, may be designated with arrows. Angles maybe designated as "included" as measured relative to surfaces or axes of an element and as defining a space bounded internally within such element therebetween, or otherwise without such designation as being measured relative to surfaces or axes of an element and as defining a space bounded externally by or outside of such element therebetween. Generally, the measures of the angles stated are as determined relative to a common axis, which axis may be transposed in the figures for purposes of convenience in projecting the vertex of an angle defined between the axis and a surface which otherwise does not extend to the axis. The term "axis" may refer to a line or to a transverse plane through such line as will be apparent from context.

For illustrative purposes, the bearing isolator seal is described in connection with its use within a dynamic, rotary sealing assembly such as may be found in pumps, turbines, electric motors, and other machines or equipment having shafts that can rotate at a relatively high rate of speed. It should be appreciated, however, that aspects of the present invention may find utility in other applications.

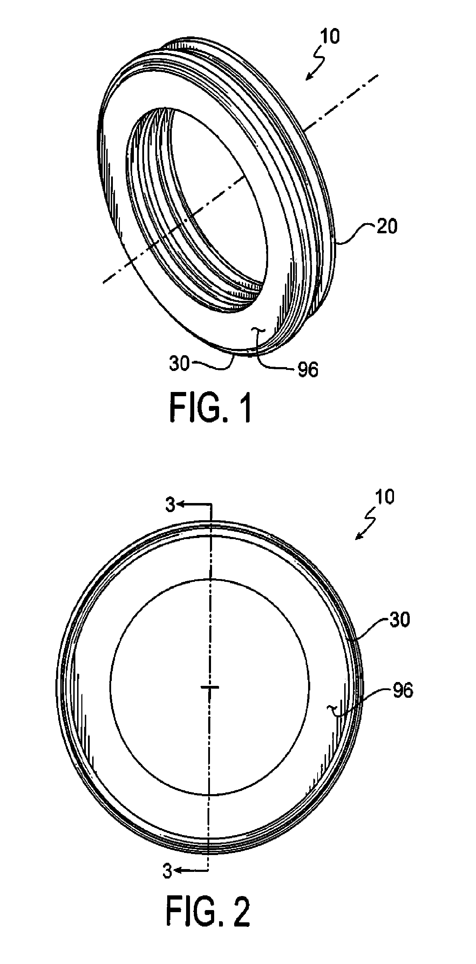

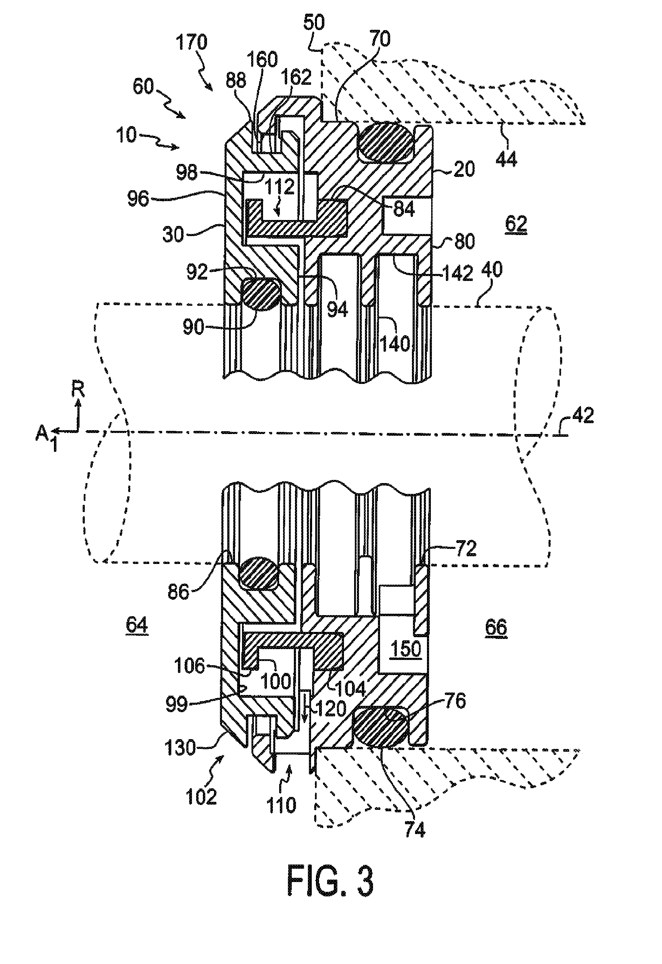

Referring then to the figures wherein corresponding reference characters are used to designate corresponding elements throughout the several views with equivalent elements being referenced with prime or sequential alphanumeric designations, a representative bearing isolator seal according to the present invention is shown generally at 10 in the perspective view of Fig. 1 and the front view of Fig. 2. As may be seen best with reference now to the cross-sectional view of Fig. 3, in basic construction, seal 10 includes as constituent parts a generally annular stator, 20, and a generally annular rotor, 30, each of which is mountable coaxially in confrontation with the other on a rotatable shaft, shown in phantom at 40, which itself may be disposed coaxially along a common central longitudinal axis, 42, within a bore, 44, of an associated housing, 50.

Collectively, seal 10, shaft 40, and housing 50 constitute a machine or other assembly which is referenced generally at 60, with seal 10 being interposed between the shaft 40 and the bore 44 to seal the annular space or clearance, referenced at 62, between the housing 50 and the rotating shaft 40. Seal 10 is so provided both to prevent contaminants from entering into the housing 50 from the exterior or ambient side, referenced at 64, of the assembly 60, and to seal the space 62 to inhibit oil or other lubricating fluid from the leaking out of the interior or oil side, referenced at 66, the assembly 60.

Stator 20 has an outer diameter face, 70, a forward portion of which is received coaxially in bore 44, and an inner diameter face, 72, mounted coaxially on shaft 40. Stator 20 may be made stationary within bore 44 by virtue of a radial compression "press-fit" of an o-ring or similar seal, 74, received within a corresponding circumferential groove, 76, formed within the forward portion of outer diameter face 70. Longitudinally, stator 20 extends along axis 42 between a first end face, 80, disposed in bore 44 and a second end face, 82, having a generally annular groove, 84, formed therein.

With continuing reference to Fig. 3, rotor 30 has an inner diameter face, 86, mountable coaxially on shaft 40, and an outer diameter face, 88. Rotor 30 may be retained on shaft 40 for rotation therewith by virtue of another radial compression "press-fit" of an o-ring or similar seal, 90, received within a corresponding circumferential groove, 92, formed within the inner diameter face 86. Longitudinally, rotor 30 extends along axis 42 between a first end face, 94, disposed opposite and axially spaced-apart from second end face 82 of stator 20, and a second end face, 96. The rotor first end face 94 has a generally annular groove, 98, formed therein opposite the first groove 84 of the stator second end face 82. Groove 98 has an end wall, 99, disposed facing the stator second end face 82.

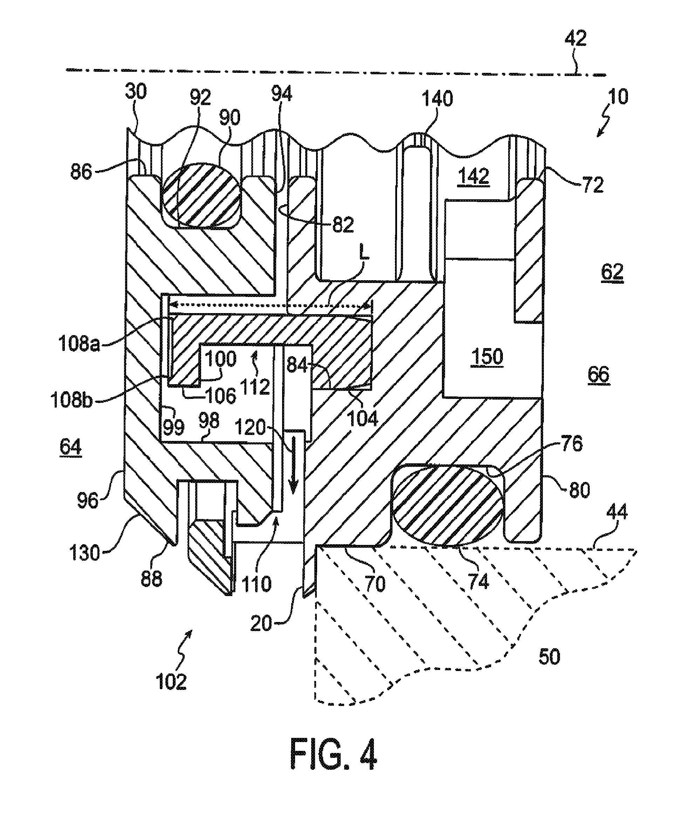

A generally annular, contaminant-blocking diffuser ring, 100, is disposed between stator 20 and rotor 20. As may be better appreciated with additional reference to Fig. 4 wherein the detail referenced at 102 in Fig. 3 is depicted in enhanced detail, diffuser ring 100 extends longitudinally in having an axial length, referenced at "L" in Fig. 4, between a first end portion, 104, which may be configured as a generally tapered boss, press-fit or otherwise mounted within stator groove 84, and a second end portion, 106, received within the rotor groove 98 in a substantially non-contacting, and thus non-wearing, relationship therewith. In this regard, the axial length L of diffuser ring 100 may be selected such that diffuser ring second end portion 106, which may be configured as a radially outwardly-extending flange portion having one or more abutment ridges, 108a-b, is abuttable against the rotor groove end wall 99 to define a predetermined clearance, referenced at 110, between the stator second end face 82 and the rotor first end face 94. Diffuser ring 100 otherwise is configured as having a circumferential recess, 112, formed between the first and second end portions 104 and 106 such that ring 100 has a generally C-shaped axial cross-sectional profile.

With diffuser ring 100 being so provided within seal 10 and the diffuser ring second end portion 106 essentially functioning as a "bumper", stator 20 and rotor 30 advantageously may be made to be self-aligning along, about or otherwise with the ring 100. Moreover, with a flow path, referenced by arrow 120, being defined between stator 20 and rotor 30, such flow path 120 may be connected in fluid communication with the rotor and groove 98 as extending radially outwardly therefrom.

In service, the flow of wet or dry contaminates between the stator second end face 82 and the rotor first end face 94 thus may be directed by the diffuser ring 100 into flow path 120 for the expulsion of such contaminates out of seal 10. Further in this regard, the rotor second end face 96 maybe configured as having a angled leading edge, 130, to assist in the deflection of contaminates to which the seal 10 may be exposed from the ambient side 64 of assembly 60 (Fig. 3). Diffuser ring 100 additionally minimizes vapour flow through seal 10.

A series of alternating circumferential ridges or other protrusions, one of which is referenced at 140, and grooves, one of which is referenced at 142, maybe formed in the stator inner diameter face 72. Such ridges 140 and grooves 142 may be provided to redirect, through centrifugal forces developed by the rotation of shaft 40, the flow of oil or other contaminates which may enter seal 10 from the oil side 66 of assembly 60 (Fig. 3) back into the housing 50 via an internal return channel 150.

Returning to Fig. 3, stator 20 and rotator 30 may be unitized, typically prior to their mounting on shaft 40, by way of a snap-fit or other interlocking engagement. In this regard, stator second end face 82 may be configured has having a circumferential hook portion, 160, which may be snap-fitted within a corresponding circumferential recess, 162, formed within the rotor outer diameter face 88 as disposed axially between the rotor ends 94 and 96.

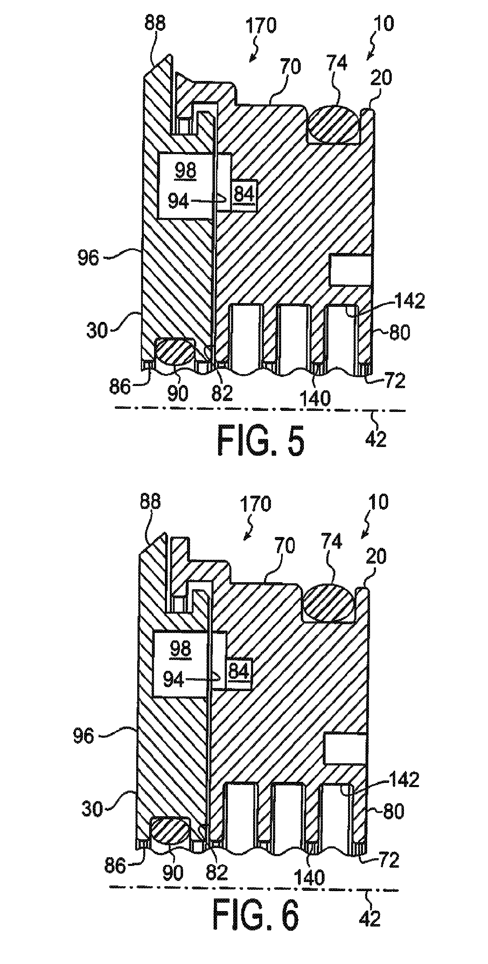

Looking lastly now to Figs. 5 and 6, the detail referenced at 170 is depicted at 170' in Fig. 5 and at 170" in Fig. 6. Alternative configurations for the interlocking, snap-fit engagement of stator 20 and rotor 30 are shown at 160' in Fig. 5 and at 160" in Fig. 6.

Materials of construction for the seal of the present invention are to be considered conventional for the applications involved. Such materials generally will be corrosion resistant and otherwise selected for compatibility with the fluid or fluids being handled and/or for desired mechanical, thermal, or other physical properties. Stator 20 and rotor 30 may be moulded, cast, machined, or otherwise formed of a metal or metal alloy such as steel, stainless steel, brass, or bronze, with diffuser ring 100 being moulded or otherwise formed of a fluoropolymer such as PTFE, or another plastic. Seals 74 and 90 each may be formed of a chemical-resistant elastomer such as a FKM or other fluoroelastomer.

## Claims

1. A bearing isolator seal (10) for installation within a machine assembly including a housing (50) having a generally annular bore (44), and a rotatable shaft (40) disposed concentrically within the bore, the seal comprising:
a generally annular stator (20) having an outer diameter face (70) receivable coaxially in the bore and an inner diameter face (72) mountable coaxially on the shaft, and the stator extending longitudinally between a first end face (80) disposable in the bore and a second end face (82) having a generally annular first groove (84) formed therein,
a generally annular rotor (30) rotatable with the shaft, the rotor having an inner diameter face (86) mountable coaxially on the shaft and an outer diameter face (88), and the rotor extending longitudinally between a first end face (94) disposed opposite and axially spaced-apart from the second end face of the stator and a second end face (96), the rotor first end face having a generally annular second groove (98) formed therein, and
a generally annular diffuser ring (100) disposed between the stator and the rotor, the diffuser ring extending longitudinally between a first end portion (104) mounted within the stator first groove and a second end portion (106) received within the rotor second groove,
in which the rotor groove has an end wall (99) disposed facing the stator second end face, and the diffuser ring has an axial length extending longitudinally between the first and second end portions, the length being selected such that diffuser ring second end portion is abuttable against the rotor groove end wall to maintain a predetermined clearance between the stator second end face and the rotor first end face
**characterised in that** the second end portion (106) of the diffuser ring is received within the rotor second groove in a substantially non-contacting relationship therewith, the diffuser ring second end portion being configured as a radially outwardly-extending flange portion and the diffuser ring having a circumferential recess (112) formed in it between the first and second end portions so that it has a generally-C-shaped axial cross-sectional profile.

2. The bearing isolator seal of claim 1 in which the stator (20) and the rotor (30) are self-aligning with the diffuser ring (100).

3. The bearing isolator seal of claim 1 in which the stator second end face (82) is configured as having a circumferential hook portion (160), and the rotor outer diameter face (88) has a circumferential recess (162) formed between the rotor first and second end faces (94, 96),
and in which the stator hook portion can be fitted within the stator recess to interlock the stator (20) and the rotor (30) together.

4. The bearing isolator seal of claim 1 in which the first end portion (106) of the diffuser ring (100) is configured as a generally tapered boss portion.

5. The bearing isolator seal of claim 4 in which the circumferential portion (112) of the diffuser ring (100) is formed between the flange portion (106) and the boss portion (104).

6. The bearing isolator seal of claim 1 in which a flow path (120) is defined between the stator (20) and the rotor (30), the flow path being in fluid communication with the rotor second groove (98) and extending radially outwardly therefrom, such that flow between the first end face (94) of the rotor (30) and the second end face (82) of the stator (20) is directed by the diffuser ring (100) into the flow path for expulsion out of the seal (10).

7. An assembly comprising:
a housing (50) having a generally annular bore (44),
a rotatable shaft (40) disposed concentrically within the bore, and
a bearing isolator seal (10) for sealing between the shaft and the bore, as defined in any one of claims 1 to 6.

## Patentansprüche

1. Eine Lagertrenndichtung (10) für die Montage innerhalb einer Maschinenanordnung, welche ein Gehäuse (50) mit einer im Wesentlichen ringförmigen Bohrung (44) und eine konzentrisch innerhalb der Bohrung angeordnete drehbare Welle (40) umfasst, wobei die Dichtung aufweist:
einen im Wesentlichen ringförmigen Stator (20) mit einer Außendurchmesserfläche (70), die koaxial in die Bohrung aufgenommen werden kann und mit einer Innendurchmesserfläche (72), die koaxial auf der Welle anbringbar ist, und wobei der Stator sich im Wesentlichen longitudinal zwischen einer ersten Endfläche (80), die in der Bohrung angeordnet werden kann und einer zweiten Endfläche (82), die eine darin geformte im Wesentlichen ringförmige erste Nut (84) aufweist, erstreckt,
einen im Wesentlichen ringförmigen Rotor (30), der mit der Welle drehbar ist, wobei der Rotor eine Innendurchmesserfläche (86), die koaxial auf der Welle anbringbar ist, und eine Außendurchmesserfläche (88) hat und wobei der Rotor sich longitudinal zwischen einer ersten Endfläche (94), die gegenüberliegend und axial beabstandet von der zweiten Endfläche des Stators angeordnet ist und einer zweiten Endfläche (96) erstreckt, wobei die erste Endfläche des Rotors eine darin geformte im Wesentlichen ringförmige zweite Nut (98) aufweist, und
einen im Wesentlichen ringförmigen Diffusorring (100), der zwischen dem Stator und dem Rotor angeordnet ist, wobei sich der Diffusorring longitudinal zwischen einem ersten Endabschnitt (104), der innerhalb der ersten Nut des Stators angebracht ist, und einem zweiten Endabschnitt (106), der innerhalb der zweiten Nut des Rotors aufgenommen ist, erstreckt,
wobei die Rotornut eine Endwand (99) hat, die gegenüberliegend der zweiten Endfläche des Stators angeordnet ist, und wobei der Diffusorring eine axiale Länge hat, die sich longitudinal zwischen dem ersten und dem zweiten Endabschnitt erstreckt, wobei die Länge derart ausgewählt ist, dass der zweite Endabschnitt des Diffusorrings gegen die Endwand der Rotornut angeschlagen werden kann, um einen vordefinierten Abstand zwischen der zweiten Endfläche des Stators und der ersten Endfläche des Rotors aufrecht zu erhalten,
**dadurch gekennzeichnet, dass** der zweite Endabschnitt (106) des Diffusorrings innerhalb der zweiten Nut des Rotors in einer im Wesentlichen berührungslosen Beziehung mit dieser aufgenommen ist, wobei der zweite Endabschnitt des Diffusorrings als ein sich radial nach außen erstreckender Flanschabschnitt ausgebildet ist und wobei der Diffusorring eine Umfangsaussparung (112) hat, die in ihm zwischen dem ersten und dem zweiten Endabschnitt geformt ist, so dass er ein im Wesentlichen C-förmiges axiales Querschnittsprofil hat.

2. Die Lagertrenndichtung nach Anspruch 1, bei welcher der Stator (20) und der Rotor (30) selbstausrichtend mit dem Diffusorring (100) sind.

3. Die Lagertrenndichtung nach Anspruch 1, bei welcher die zweite Endfläche (82) des Stators derart ausgebildet ist, dass sie einen umlaufenden Hakenabschnitt (160) hat, und bei welcher die Außendurchmesserfläche (88) des Rotors eine umlaufende Aussparung (162) hat, die zwischen der ersten und zweiten Endfläche (94, 96) des Rotors geformt ist,
und bei welcher der Hakenabschnitt des Stators innerhalb der Statoraussparung befestigt werden kann, um den Stator (20) und den Rotor (30) miteinander zu verriegeln.

4. Die Lagertrenndichtung nach Anspruch 1, bei welcher der erste Endabschnitt (106) des Diffusorrings (100) als ein im Wesentlichen spitz zulaufender bombierter Abschnitt gebildet ist.

5. Die Lagertrenndichtung nach Anspruch 4, bei welcher der umlaufende Abschnitt (112) des Diffusorrings (100) zwischen dem Flanschabschnitt (106) und dem bombierten Abschnitt (104) geformt ist.

6. Die Lagertrenndichtung nach Anspruch 1, bei welcher ein Strömungsweg (120) zwischen dem Stator (20) und dem Rotor (30) definiert ist, wobei der Strömungsweg in einer Fluidverbindung mit der zweiten Nut (98) des Rotors steht und sich davon radial nach außen erstreckt, so dass Strömung zwischen der ersten Endfläche (94) des Rotors (30) und der zweiten Endfläche (82) des Stators (20) durch den Diffusorring (100) in den Strömungsweg zum Austreiben aus der Dichtung (10) geleitet wird.

7. Eine Vorrichtung mit:
einem Gehäuse (50) mit einer im Wesentlichen ringförmigen Bohrung (44),
einer drehbaren Welle (40), die konzentrisch innerhalb der Bohrung angeordnet ist, und
einer Lagertrenndichtung (10) zum Dichten zwischen der Welle und der Bohrung, wie in einem der Ansprüche 1 bis 6 definiert.

## Revendications

1. Joint d'isolateur de palier (10) pour une installation dans un ensemble de machine comportant un boîtier (50) ayant un alésage globalement annulaire (44), et un arbre rotatif (40) disposé de manière concentrique à l'intérieur de l'alésage, le joint comprenant :
un stator globalement annulaire (20) ayant une face de diamètre externe (70) pouvant être reçue de manière coaxiale dans l'alésage et une face de diamètre interne (72) pouvant être montée de manière coaxiale sur l'arbre, et le stator s'étendant longitudinalement entre une première face d'extrémité (80) pouvant être disposée dans l'alésage et une deuxième face d'extrémité (82) ayant une première rainure globalement annulaire (84) formée dans celle-ci,
un rotor globalement annulaire (30) pouvant tourner avec l'arbre, le rotor ayant une face de diamètre interne (86) pouvant être montée de manière coaxiale sur l'arbre et une face de diamètre externe (88), et le rotor s'étendant longitudinalement entre une première face d'extrémité (94) disposée à l'opposé et axialement espacée de la deuxième face d'extrémité du stator et une deuxième face d'extrémité (96), la première face d'extrémité de rotor ayant une deuxième rainure globalement annulaire (98) formée dans celle-ci, et
une bague de diffuseur globalement annulaire (100) disposée entre le stator et le rotor, la bague de diffuseur s'étendant longitudinalement entre une première partie d'extrémité (104) montée à l'intérieur de la première rainure de stator et une deuxième partie d'extrémité (106) reçue à l'intérieur de la deuxième rainure de rotor,
dans lequel la rainure de rotor a une paroi d'extrémité (99) disposée en face de la deuxième face d'extrémité de stator, et la bague de diffuseur a une longueur axiale s'étendant longitudinalement entre les première et deuxième parties d'extrémité, la longueur étant choisie de sorte que la deuxième partie d'extrémité de bague de diffuseur puisse venir en butée contre la paroi d'extrémité de rainure de rotor pour maintenir un jeu prédéterminé entre la deuxième face d'extrémité de stator et la première face d'extrémité de rotor
**caractérisé en ce que** la deuxième partie d'extrémité (106) de la bague de diffuseur est reçue dans la deuxième rainure de rotor dans une relation sensiblement sans contact avec celle-ci, la deuxième partie d'extrémité de bague de diffuseur étant configurée comme une partie de bride s'étendant radialement vers l'extérieur et la bague de diffuseur ayant un évidement circonférentiel (112) formé dedans entre les première et deuxième parties d'extrémité de sorte qu'il présente un profil en coupe transversale axiale globalement en forme de C.

2. Joint d'isolateur de palier de la revendication 1, dans lequel le stator (20) et le rotor (30) sont auto-alignés avec la bague de diffuseur (100).

3. Joint d'isolateur de palier de la revendication 1, dans lequel la deuxième face d'extrémité de stator (82) est configurée comme ayant une partie de crochet circonférentiel (160), et la face de diamètre externe de rotor (88) présente un évidement circonférentiel (162) formé entre les première et deuxième faces d'extrémité de rotor (94, 96),
et dans lequel la partie de crochet de stator peut être montée dans l'évidement de stator pour verrouiller le stator (20) et le rotor (30) ensemble.

4. Joint d'isolateur de palier de la revendication 1, dans lequel la première partie d'extrémité (106) de la bague de diffuseur (100) est configurée sous forme d'une partie de bossage globalement conique.

5. Joint d'isolateur de palier de la revendication 4, dans lequel la partie circonférentielle (112) de la bague de diffuseur (100) est formée entre la partie de bride (106) et la partie de bossage (104).

6. Joint d'isolateur de palier de la revendication 1, dans lequel un trajet d'écoulement (120) est défini entre le stator (20) et le rotor (30), le trajet d'écoulement étant en communication fluidique avec la deuxième rainure de rotor (98) et s'étendant radialement vers l'extérieur de celle-ci, de sorte que l'écoulement entre la première face d'extrémité (94) du rotor (30) et la deuxième face d'extrémité (82) du stator (20) soit dirigé par la bague de diffuseur (100) dans le trajet d'écoulement pour une expulsion hors du joint (10).

7. Ensemble comprenant :
un boîtier (50) ayant un alésage globalement annulaire (44),
un arbre rotatif (40) disposé de manière concentrique à l'intérieur de l'alésage, et
un joint d'isolateur de palier (10) pour assurer l'étanchéité entre l'arbre et l'alésage, tel que défini dans l'une quelconque des revendications 1 à 6.
